# EUROPÄISCHE PATENTSCHRIFT

(11) **EP 0 513 573 B1**
(45) Veröffentlichungstag und Bekanntmachung des Hinweises auf die Patenterteilung: **16.10.1996**
(21) Anmeldenummer: 92106987.8
(22) Anmeldetag: 24.04.1992
(51) Int. Cl.: C08J 9/00, C08J 9/34, C08J 9/02, C08L 75/04

(54) **Verfahren zur Herstellung von Fluorchlorkohlenwasserstoff freien, Urethangruppen enthaltenden Formkörpern mit einem zelligen Kern und einer verdichteten Randzone**
Process for the preparation of molded articles containing urethane groups, devoid of fluorochlorohydrocarbons, having a cellular core and a compact outer layer
Procédé de préparation d'articles moulés contenant des groupes d'uréthane, dépourvus de fluorochlorohydrocarbures et ayant un noyau cellulaire et une couche externe compacte

(30) Priorität: 11.05.1991 DE 4115456
(43) Veröffentlichungstag der Anmeldung: 19.11.1992
(73) Patentinhaber: BASF Aktiengesellschaft, 67063 Ludwigshafen (DE)
(72) Erfinder: Horn, Peter, Dr., W-6900 Heidelberg (DE); Mueller, Ulrich, Dr., W-6730 Neustadt (DE); Hoelderich, Wolfgang, Prof. Dr., W-6710 Frankenthal (DE); Sattler, Ulf, W-4555 Rieste (DE); Taddey, Rudolf, W-2845 Damme (DE); Tintelnot, Dieter, W-2840 Diepholz (DE)

(56) Entgegenhaltungen:
- EP-A- 0 319 866
- DE-B- 1 203 458
- GB-A- 1 533 989

## Beschreibung

Gegenstand der Erfindung ist ein Verfahren zur Herstellung von Fluorchlorkohlenwasserstoff freien, Urethangruppen enthaltenden, weichelastischen, halbharten oder harten Formkörpern mit einem zelligen Kern und einer verdichteten Randzone sowie einer im wesentlichen porenfreien, glatten Oberfläche, sogenannten Polyurethan(PU)-Integralschaumstoffen, durch Umsetzung der an sich bekannten Aufbaukomponenten zur Bildung von Polyisocyanat-polyadditionsprodukte in Gegenwart von Wasser und/oder inerten physikalisch wirkenden Treibmitteln mit Ausnahme von Fluorchlorkohlenwasserstoffen, Katalysatoren, amorphen, mikroporösen Kieselgelen sowie gegebenenfalls zusätzlichen anderen Zusatzstoffen und Hilfsmitteln.

Die Herstellung von Formkörpern mit einem zelligen Kern und einer verdichteten Randzone durch Umsetzung von organischen Polyisocyanaten, höhermolekularen Verbindungen mit mindestens zwei reaktiven Wasserstoffatomen und gegebenenfalls Kettenverlängerungs- und/oder Vernetzungsmitteln in Gegenwart von Treibmitteln, vorzugsweise physikalisch wirkenden Treibmitteln, Katalysatoren, Hilfs- und/oder Zusatzstoffen in einem geschlossenen, gegebenenfalls temperierten Formwerkzeug ist seit langem bekannt und wird beispielsweise beschrieben in der DE-OS 16 94 138 (GB 1 209 243), DE-PS 19 55 891 (GB 1 321 679) und DE-AS 17 69 886 (US 3 824 199).

Eine zusammenfassende übersicht über derartige Formkörper, sogenannte Polyurethan-Integralschaumstoffe, wurde beispielsweise veröffentlicht in Kunststoff-Handbuch, Band 7, Polyurethane, herausgegeben von Dr. G. Oertel, Carl-Hanser-Verlag, München, Wien, 2. Auflage, 1983, Seiten 333ff. und in Integralschaumstoffe von Dr. H. Piechota und Dr. H. Röhr, Carl-Hanser-Verlag, München, Wien, 1975.

Obgleich die Herstellung von weichelastischen, halbharten oder harten PU-Integralschaumstoff-Formkörpern eine außerordentiiche technische Bedeutung erlangt hat, weisen die beschriebenen Verfahren aufgrund des gesteigerten Umweitbewußtseins hinsichtlich der verwendeten Treibmittel Mängel auf. Als Treibmittel werden weltweit in großem Maßstabe Fluorchloralkane, vorzugsweise Trichlorfluormethan, eingesetzt, die unter dem Einfluß der exothermen Polyadditionsreaktion zunächst verdampfen, danach bei erhöhtem Druck an der kühleren Innenwand des Formwerkzeugs partiell kondensiert und in den Formkörper eingelagert werden. Nachteilig an diesen Treibgasen ist lediglich die Belastung der Umwelt, da sie in Verdacht stehen, in der Stratosphäre am Abbau der Ozonschicht beteiligt zu sein.

Zur Reduzierung der Fluorchloralkane wird als Treibmittel vorwiegend Wasser eingesetzt, das mit dem Polyisocyanat unter Kohlendioxidentwicklung reagiert, welches als eigentliches Treibgas wirkt. Nachteilig an diesem Verfahren ist, daß das gebildete Kohlendioxid unter den im Formwerkzeug vorliegenden Reaktionsbedingungen an der Werkzeuginnenfläche nicht kondensiert wird und so zur Bildung von Formkörpern mit einer porenhaltigen Oberfläche führt.

Nach Angaben der DE-A-1 804 362 (GB 1 285 224) können PU-Schaumstoffe mit einer kompakten Oberfläche und einem zelligen Kern unter Mitverwendung von Alkali-Aluminium-Silikaten mit Zeolithstruktur hergestellt werden. Als Treibmittel finden insbesondere Halogenkohlenwasserstoffe oder Mischungen aus Halogenkohlenwasserstoffen und partiell hydratisierten Alkali-Aluminium-Silikaten oder organische Hydratwasser haltige Verbindungen Verwendung. Durch den Zusatz von Wasser und der Alkali-Aluminium-Silikate sollten trotz der Mitverwendung von Fluorchlorkohlenwasserstoffen schrumpffreie PU-Integralschaumstoff-Formkörper mit Gesamtdichten bis 120 g/Liter hergestellt werden.

Fluorchlorkohlenwasserstoff freie, harte PU-Schaumstoff-Formteile mit einer hohen Oberflächenhärte und einer bei mindestens 300 kg/m³ liegenden Rohdichte werden in der EP-A-0 319 866 (US 4 882 363) beschrieben. Zu ihrer Herstellung finden Polyhydroxylverbindungen oder ein Gemisch organischer Polyhydroxylverbindungen mit einer mittleren Hydroxylfunktionalität von mindestens 2,2 und einer mittleren Hydroxylzahl von mindestens 300 mg KOH/g, als Treibmittel Wasser und/oder Kohlendioxid und als Zusatzmittel zeolithische Absorbentien mit einem Durchmesser der Porenöffnung zu den Absorptionshohlräumen von mindestens 0,7 nm Verwendung.

Zeolithmodifizierte, wassergetriebene Polyurethanschaumstoffe, die sich durch eine verbesserte Flammwidrigkeit auszeichnen und keine halogen- oder/und phosphorhaltigen Flammschutzmittel enthalten, werden in der EP-A-0 388 952 beschrieben. Nach Angaben der US-A-4, 518, 718 können geschlossenzellige harte Polyurethanschaumstoffe mit einer höheren Wärmeformbeständigkeit hergestellt werden durch Umsetzung von Polyolen mit Polyisocyanaten, wobei jeder dieser Aufbaukomponenten ein Zeolith einverleibt wird, der Moleküle mit einem effektiven kritischen Durchmesser bis zu 0,1 nm absorbieren kann.

Ein Verfahren zur Herstellung von weichelastischen Polyurethan-Formkörpern mit einem zelligen Kern und einer kompakten Randzone nach der RIM-Technik wird in der P 40 34 082.1 beschrieben. Als Zusatzmittel werden kristalline, mikroporöse Molekularsiebe und/oder kristallines Siliciumdioxid verwendet. Obgleich nach diesem Verfahren Formkörpern mit guten mechanischen Eigenschaften und einer im wesentlichen porenfreien, glatten Oberfläche erhalten werden, weist das Verfahren auch Nachteile auf. Nachteilig ist z.B. die schwierige und technisch aufwendige Herstellung der mikroporösen, kristallinen Molekularsiebe und des Siliciumdioxids und die beträchtliche Menge an diesen Zusatzstoffen, die der Polyurethanformulierung einverleibt werden muß, um Polyurethanformkörper mit der gewünschten kompakten Randzone und einer im wesentlichen porenfreien Oberfläche zu erzielen.

Die Aufgabe der vorliegenden Erfindung bestand somit darin, Urethangruppen enthaltende Formkörper mit einem zelligen Kern und einer verdichteten Randzone mit einer im wesentlichen porenfreien, glatten Oberfläche ohne die Mitverwendung von Fluorchlorkohlenwasserstoffen nach einem einfachen, kostengünstigen Verfahren herzustellen. Geeignete Polyurethanformulierungen sollten leicht handhabbar, gut fließfähig und auch in Abwesenheit von Fluorchlorkohlenwasserstoffen, das als Verdünnungsmittel wirkt, nach der RIM- oder Niederdrucktechnik gut verarbeitbar sein.

Diese Aufgabe konnte überraschenderweise gelöst werden durch die Mitverwendung von amorphen, mikroporösen Kieselgelen zur Herstellung der PU-Integralschaumstoff-Formkörper.

Gegenstand der Erfindung ist somit ein Verfahren zur Herstellung von Fluorchlorkohlenwasserstoff freien, Urethangruppen enthaltenden Formkörpern mit einem zelligen Kern und einer verdichteten Randzone durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren,
f) Zusatzstoffen und gegebenenfalls
g) Hilfsmitteln
in einem geschlossenen Formwerkzeug unter Verdichtung, das dadurch gekennzeichnet ist, daß man als Zusatzstoff (f) amorphe, mikroporöse Kieselgele verwendet, die ein Porenvolumen im Bereich von 0,15 bis 1,8 ml/g besitzen und
die einen mittleren Porendurchmesser haben, der zu mehr als 40 % im Bereich von 0,1 bis 10 nm liegt.

Trotz Zusatz der amorphen, mikroporösen Kieselgele und der damit verbundenen Viskositätserhöhung der Systemkomponenten, sind diese sehr gut fließfähig und nach der RIM- oder Niederdruck-Technik problemlos verarbeitbar. Die hergestellten halbharten, harten oder vorzugsweise weichelastischen PU-Integralschaumstoff-Formteile besitzen eine Randzone höherer Dichte und eine glatte im wesentlichen porenfreie und blasenfreie Oberfläche. Die Shore-A-Härte der Oberfläche entspricht ebenso wie die übrigen mechanischen Eigenschaften der mit Fluorchlorkohlenwasserstoff aufgeschäumter Integralschaumstoff-Formkörper.

Zu den für das erfindungsgemäße Verfahren verwendbaren Aufbaukomponenten (a), (b) und (d) bis (f) sowie gegebenenfalls (c) und (g) und den erfindungsgemäß geeigneten amorphen, mikroporösen Kieselgelen ist folgendes auszuführen:

Als organische Polyisocyanate (a) kommen aliphatische, cycloaliphatische, araliphatische und vorzugsweise aromatische mehrwertige Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylendiisocyanat-1,6; cycloaliphatische Diisocyanate, wie Cyclohexan-1,3-und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 4200 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15 Gew.%, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten, wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Herstellung der weichelastischen oder halbharten Polyurethan-Integralschaumstoff-Formkörper zur Anwendung:
NCO-Gruppen enthaltende Prepolymere mit einem NCO-Gehalt von 25 bis 9 Gew.%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4'-Diphenylmethan-diisocyanat oder Diphenylmethan-diisocyanat-Isomerengemischen, Mischungen aus 2,4-und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI. Die aromatischen Polyisocyanate, modifizierten aromatischen Polyisocyanate oder Polyisocyanatmischungen besitzen zweckmäßigerweise eine durchschnittliche Funktionalität von 2 bis 2,6, vorzugsweise 2 bis 2,4 und insbesondere 2 bis 2,2. Zur Herstellung der harten Polyurethan-Integralschaumstoff-Formkörper finden vorzugsweise mit Urethangruppen modifizierte aromatische Polyisocyanate einer Funktionalität von größer als 2,6, zweckmäßigerweise von 2,8 bis 3,5 und insbesondere Roh-MDI Verwendung.

Sofern für spezielle Anwendungsgebiete Formkörper mit lichtbeständiger Oberfläche, wie z.B. für Automobilinnenauskleidungen oder Nackenstützen, gefordert werden, werden zu deren Herstellung bevorzugt aliphatische oder cycloaliphatische Polyisocyanate, insbesondere modifizierte Polyisocyanate auf der Grundlage von Hexamethylen-diisocyanat-1,6 oder Isophoron-diisocyanat oder Gemische der genannten Diisocyanate gegebenenfalls mit Diphenylmethan-diisocyanat- und/oder Toluylen-diisocyanat-Isomeren verwendet.

Als höhermolekulare Verbindungen b) mit mindestens zwei reaktiven Wasserstoffatomen werden zweckmäßigerweise solche mit einer Funktionalität von 2 bis 8 und einem Molekulargewicht von 500 bis 8500 verwendet, wobei zur Herstellung von weichelastischen und halbharten Polyurethan-Integralschaumstoff-Formkörpern die höhermolekularen Verbindungen (b) eine Funktionalität von vorzugsweise 2 bis 3 und insbesondere 2,0 bis 2,6 und ein Molekulargewicht von vorzugsweise 1800 bis 6000 und insbesondere 2000 bis 5000 besitzen und zur Herstellung von harten Polyurethan-Integralschaumstoff-Formkörpern solche mit einer Funktionalität von vorzugsweise 3 bis 8 und insbesondere 3 bis 6 und einem Molekulargewicht von vorzugsweise 500 bis 3200, insbesondere 600 bis 2400 Anwendung finden. Besonders bewährt haben sich Polyole, ausgewählt aus der Gruppe der Polyether-polyole, Polyester-polyole, Polythioether-polyole, hydroxylgruppenhaltigen Polyesteramide, hydroxylgruppenhaltigen Polyacetale, hydroxylgruppenhaltigen aliphatischen Polycarbonate und polymermodifizierten Polyether-polyole oder Mischungen aus mindestens zwei der genannten Polyole. Insbesondere Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono-und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole und Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythrit. Vorzugsweise verwendet werden Ethandiol, Diethylenglykol, 1,4-Butandiol, 1,5-Pentandiol, 1,6-Hexandiol, Glycerin oder Mischungen aus mindestens zwei der genannten Diole, insbesondere Mischungen aus 1,4-Butandiol, 1,5-Pentandiol und 1,6-Hexandiol und/oder Glycerin. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 3, insbesondere 2 bis 2,6 und ein Molekulargewicht von 1200 bis 3600, vorzugsweise 1500 bis 3000 und insbesondere 1800 bis 2500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls das 2 bis 8, vorzugsweise 2 oder 3 reaktive Wasserstoffatome für Polyether-polyole zur Herstellung von halbharten und weichelastischen PU-Integralschaumstoff-Formkörpern und vorzugsweise 3 bis 8, insbesondere 3 bis 6 reaktive Wasserstoffatome für Polyether-polyole zur Herstellung von harten PU-Integralschaumstoff-Formkörpern gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine, wie z.B. Triethanolamin und Ammoniak. Vorzugsweise verwendet werden mehrwertige, insbesondere zwei- und/oder dreiwertige Alkohole und/oder Dialkylenglykole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose oder Mischungen aus mindestens zwei mehrwertigen Alkoholen und gegebenenfalls zusätzlich Wasser.

Die Polyether-polyole, vorzugsweise Polyoxypropylen- und Polyoxypropylenpolyoxyethylen-polyole, besitzen, wie bereits ausgeführt wurde, eine Funktionalität von 2 bis 8 und Molekulargewichte von 500 bis 8500, und geeignete Polyoxytetramethylen-glykole ein Molekulargewicht bis ungefähr 3500, vorzugsweise von 600 bis 2200.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den polymermodifizierten Polyether-polyolen oder Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Trioxyethylenglykol oder Tetraoxyethylenglykol mit Diarylcarbonaten, z.B. Diphenylcarbonat, oder Phosgen hergestellt werden können.

Zu den hydroxylgruppenhaltigen Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Die Urethangruppen enthaltenden, harten, halbarten und vorzugsweise weichelastischen Formkörper mit verdichteter Randzone und zelligem Formkörperkern können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden z.B. niedermolekulare, mehrwertige Alkohole, vorzugsweise Diole und/oder Triole, mit Molekulargewichten kleiner als 480, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Triethylenglykol, Dipropylenglykol, Tripropylenglykol und vorzugsweise Butandiol-1,3, Butandiol-1,4, Hexandiol-1,6 und Bis-(2-hydroxyethyl)-hydrochinon, Triole, wie 1,2,4-, 1,3,5-Trihydroxycyclohexan, Trimethylolethan, Glycerin und Trimethylolpropan und niedermolekulare hydroxylgruppenhaltige Polyalkylenoxide, z.B. mit Molekulargewichten bis 480, auf Basis Ethylen- und/oder 1,2-Propylenoxid und den vorgenannten zur Polyether-polyolherstellung genannten Startermolekülen.

Als Kettenverlängerungsmittel eignen sich ferner N,N'-dialkylsubstituierte, aromatische Diamine, die gegebenenfalls am aromatischen Rest durch Alkylgruppen substituiert sein können, mit 1 bis 20, vorzugsweise 1 bis 4 Kohlenstoffatomen im N-Alkylrest, wie z.B. N,N'-Diethyl-, N,N'-Di-sek.-pentyl, N,N'-Di-sek.hexyl-, N,N'-Di-sek.decyl- und N,N'-Dicyclohexyl-, p- bzw. m-phenylendiamin, N,N'-Dimethyl-, N,N'-Diethyl-, N,N'-Diisopropyl-, N,N'-Di-sek.butyl- und N,N'-Dicyclohexyl-4,4'-diamino-diphenylmethan und N,N'-Di-sek.butylbenzidin.

Sofern die Verbindungen der Komponente (c) mitverwendet werden, können diese in Form von Mischungen oder einzeln eingesetzt werden und werden vorteilhafterweise in Mengen von 1 bis 50 Gew.-Teilen, vorzugsweise von 3 bis 40 Gew.-Teilen, bezogen auf 100 Gew.-Teile der höhermolekularen Verbindungen (b), angewandt.

d) Als Treibmittel (d) findet vorzugsweise Wasser Verwendung, das mit den organischen, gegebenenfalls modifizierten Polyisocyanaten (a) unter Bildung von Kohlendioxid und Harnstoffgruppen reagiert und dadurch die Druckfestigkeit der Endprodukte beeinflußt. Da die in den erfindungsgemäß verwendbaren amorphen, mikroporösen Kieselgelen enthaltene Wassermenge, die je nach Porengröße und Porenvolumen bis zu 20 Gew.-%, vorzugsweise 3 bis 20 Gew.-%, bezogen auf das Gesamtgewicht, betragen kann, meist ausreicht, bedarf es vielfach keiner separaten Wasserzugabe. Sofern jedoch der Polyurethan-Formulierung zusätzlich Wasser einverleibt werden muß zur Erzielung des gewünschten Raumgewichts, wird dieses üblicherweise in Mengen von 0,05 bis 5 Gew.%, vorzugsweise von 0,1 bis 3 Gew.% und insbesondere von 0,1 bis 1 Gew.%, bezogen auf das Gewicht der Aufbaukomponente (a) bis (c) verwendet.

Als Treibmittel (d) können anstelle von Wasser oder vorzugsweise in Kombination mit Wasser und den erfindungsgemäß geeigneten amorphen, mikroporösen Kieselgele auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 120°C, vorzugsweise von 10 bis 90°C besitzen, oder Gase eingesetzt werden.

Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, Cycloalkylenether, wie z.B. Furan, Ketone, wie z.B. Aceton, Methylethylketon, Carbonsäureester, wie Ethylacetat und Methylformiat, Carbonsäuren wie Ameisensäure, Essigsäure und Propionsäure, Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorethan und Gase, wie z.B. Stickstoff, Kohlenmonoxid und Edelgase wie z.B. Helium, Neon und Krypton.

Die zweckmäßigste Menge an niedrigsiedender Flüssigkeit und Gase, die jeweils einzeln als Flüssigkeits- oder Gasmischungen oder als Gasflüssigkeitsgemische eingesetzt werden können, hängt ab von der Dichte, die man erreichen will und der eingesetzten Menge an amorphen mikroporösen Kieselgelen oder Kieselgelen und Wasser. Die erforderlichen Mengen können durch einfache Handversuche leicht ermittelt werden. Zufriedenstellende Ergebnisse liefern üblicherweise Flüssigkeitsmengen von 0,5 bis 20 Gew.-Teilen, vorzugsweise von 2 bis 10 Gew.-Teilen und Gasmengen von 0,01 bis 30 Gew.-Teilen, vorzugsweise von 2 bis 20 Gew.-Teilen, jeweils bezogen auf 100 Gew.-Teile der Komponente (b) und gegebenenfalls (c). Als Treibmittel keine Anwendung finden, wie bereits ausgeführt wurde, Perfluorchlorkohlenwassetstoffe.

e) Als Katalysatoren (e) zur Herstellung der Formkörper mit einer verdichteten Randzone und einem zelligen Kern werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinn-dilaurat, Dibutylzinnmaleat und Dioctylzinn-diacetat. Als gut geeignet haben sich auch Dialkylzinn(IV)-mercaptoverbindungen erwiesen, wie z.B. Bislaurylzinn(IV)-dimercaptid, und Verbindungen der allgemeinen Formeln R₂Sn(SR^{I}-O-CO-R^{II})₂ oder R₂Sn(SR^{I}-CO-OR^{II})₂, in denen R einen Alkylrest mit mindestens 8 Kohlenstoffatomen, R^{I} einen Alkylenrest mit mindestens 2 Kohlenstoffatomen und R^{II} einen Alkylrest mit mindestens 4 Kohlenstoffatomen bedeuten. Als Katalysatoren dieser Art, die beispielsweise in der DD-A-218 668 beschrieben werden, seien beispielhaft genannt: Dioctylzinn-bis(thioethylenglykol-2-ethylhexoat), Dioctylzinn-bis(thioethylenglykollaurat), Dioctylzinn-bis(thiolatoessigsäure-2-ethylhexylester, Dioctylzinn-bis(thiolatoessigsäurehexylester) und Dioctylzinn-bis(thiolatoessigsäurelaurylester. Als Katalysatoren sehr gut bewährt haben sich ferner Organozinnverbindungen mit Zinn-Sauerstoff- oder Zinn-Schwefel-Bindungen, wie sie beispielsweise in der DD-A-255 535 beschrieben werden, der allgemeinen Formeln (R₃Sn)₂O, R₂SnS, (R₃Sn)₂S, R₂Sn(SR^{I}) oder RSn(SR^{I})₃, in denen R und R^{I} Alkylgruppen darstellen, die 4 bis 8 Kohlenstoffatome bei R sowie 4 bis 12 Kohlenstoffatome bei R^{I} enthalten und R^{I} außerdem die Reste -R^{II}COOR^{III} und -R^{II}OCOR^{III} bedeuten kann, in denen R^{II} Alkylgruppen mit 1 bis 6 Kohlenstoffatomen und R^{III} Alkylengruppen mit 4 bis 12 Kohlenstoffatomen sind. Als Beispiele hierfür seien genannt: Bis(tributylzinn)oxid, Dibutylzinnsulfid, Dioctylzinnsulfid, Bis(tributylzinn)sulfid, Dibutylzinn-bis(thioglykolsäure-2-ethylhexylester), Dioctylzinn-bis(thioglykolsäure-2-ethylhexylester), Octylzinn-tris(thioglykolsäure-2-ethyl-hexyl-ester), Dioctylzinnbis(thioethylenglykol-2-ethyl-hexoat) und Dibutylzinn-bis(thioethylenglykollaurat).

Die organischen Metallverbindungen können als Katalysatoren einzeln oder in Form von Katalysatorkombinationen eingesetzt werden. Als äußerst vorteilhaft hat sich eine Kombination erwiesen, die besteht aus 94 Gew.-% Di-n-octylzinn-bis-(2-ethylhexylthioglykolat) und 6 Gew.-% Mono-n-octylzinn-tris-(2-ethylhexylthioglykolat).

Die organischen Metallverbindungen können ferner in Kombination mit stark basischen Aminen verwendet werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N'N'-Tetramethylbutandiamin, N,N,N',N'-Tetramethyl-diamino-dicyclohexylmethan, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Insbesondere bei Verwendung eines Polyisocyanatüberschusses kommen als Katalysatoren ferner in Betracht:
Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat, Alkaliformiate und -acetate, wie z.B. Kaliumformiat und Kaliumacetat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).

f) Wesentliches Merkmal der vorliegenden Erfindung ist die Verwendung von amorphen, mikroporösen Kieselgelen als Zusatzstoff (f). Derartige erfindungsgemäß, verwendbare Kieselgele besitzen eine chemische Zusammensetzung, die mindestens 80 Gew.-% vorzugsweise zu mehr als 90 Gew.-% und insbesondere zu mehr als 95 Gew.-%, bezogen auf das Gesamtgewicht, Siliciumdioxid enthält.

Außer Siliciumdioxid können die geeigneten Kieselgele zusätzlich Metalloxide, vorzugsweise Oxide des Aluminiums, Titans, Zirkons, Magnesiums, Niobs, Eisens oder Zinks oder mindestens zwei dieser Metalloxide sowie Wasser enthalten. Vorzugsweise Verwendung finden Kieselgele die neben Wasser ausschließlich aus Siliciumdioxid bestehen.

Die erfindungsgemäßen verwendbaren amorphen, mikroporösen Kieselgele besitzen vorteilhafterweise einen mittleren Porendurchmesser von 0,1 bis 10 nm, vorzugsweise von 0,5 bis 5 nm, insbesondere von 0,7 bis 3 nm und insbesondere bevorzugt von 1 bis 2,5 nm. Die Häufigkeit der mittleren Porendurchmesser in den angegebenen Bereichen beträgt zweckmäßigerweise mehr als 40 %, vorzugsweise mehr als 50 % und insbesondere mehr als 60 %.

Das Porenvolumen der erfindungsgemäß geeigneten amorphen, mikroporösen Kieselgele liegt vorteilhafterweise im Bereich von 0,15 bis 1,8 ml/g, vorzugsweise von 0,2 bis 1,1 ml/g und insbesondere von 0,3 bis 0,6 ml/g. Die Porosität dieser Kieselgele und damit die Bestimmung des Porenvolumens kann erfaßt werden durch eine Titration, mit beispielsweise Wasser, nach einem Verfahren, wie es von A.Y. Mottlau und N.E. Fisher in Anal. Chem. Vol 34 (6), Seiten 714-715 (1962) beschrieben wird.

Bestimmt man das Porenvolumen der amorphen, mikroporösen Kieselgele aus dem abszissenparallelen Verlauf einer mit Stickstoff bei 77 K daran gemessenen Gas-Sorptionsisotherme, so berechnen sich nach dem BJH-Modell (E.P. Barrett, L.G. Joyner, P.P. Halenda, J. Amer. Chem. Soc., Vol. 73, 373-380 (1951)) die mittleren Porendurchmesser.

Die erfindungsgemäß verwendbaren amorphen, mikroporösen Kieselgele ergeben bei der Bestimmung der äquivalenten spezifischen Oberfläche nach der Berechnung mittels der BET Methode (s. Brunauer, P.H. Emmett, E. Teller in J. Amer. Chem. Soc. Vol. 60, Seiten 309 bis 319 (1938) Werte von vorteilhafterweise 200 bis 900 m²/g, vorzugsweise von 300 bis 900 m²/g und insbesondere von 320 bis 800 m²/g.

Ein weiteres Charakteristikum der erfindungsgemäß verwendbaren Kieselgele kann der Verlauf der Absorptionsisothermen sein. In nach dem Stand der Technik ausgeführten Gasadsorptionsmessungen mit Stickstoff bei einer Temperatur von 77 K können die erfindungsgemäß verwendbaren Kieselgele eine Isotherme aufweisen, deren Verlauf als Typ I bekannt ist (K.S.W. Sing, D.M. Everett, R.A.W. Haul, L. Moscou, R.A. Pierotti, J. Rouquerol und T. Siemieniewska in Pure and Appl. Chem. Vol. 57 (4) Seiten 603 bis 619 (1985)).

Die erfindungsgemäß verwendbaren amorphen, mikroporösen Kieselgele sind bekannt und im Handel erhältlich. Verfahren zu ihrer Herstellung und ihre Eigenschaften werden z.B. beschrieben von R.K. Iler in The Chemistry of Silica, Verlag Wiley-Interscience, New York 1979 oder von K.K. Unger in Porous Silica, Journal of Chromatography Library, Volume 16, Elsevier Scientific Publishing Company, Amsterdam 1979.

Die erfindungsgemäß verwendbaren amorphen, mikroporösen Kieselgele können einzeln oder in Form einer Mischung aus mindestens zwei Kieselgelen mit unterschiedlichen Spezifikationen verwendet werden. Je nach den gewünschten Eigenschaften der herzustellenden PU-Integralschaumstoff-Formkörper kann es sich als zweckmäßig erweisen, Mischungen aus Kieselgelen zu verwenden, die sich beispielsweise durch das Porenvolumen, den Porendurchmesser und/oder verschieden große Wassergehalte unterscheiden. Durch diese Maßnahme kann die Treibreaktion und die Verdichtung in vorteilhafter Weise gezielt gesteuert und in einfacher Weise an die gegebenen Verfahrensvorrichtungen angepaßt werden oder es können mechanischen Eigenschaften des Endproduktes insgesamt oder in bestimmten Bereichen eines Formkörpers modifiziert werden. Verwendbar sind ferner Kombinationen aus amorphen mikroporösen Kieselgelen des Isothermentyps I mit amorphen mesoporösen Kieselgelen des Isothermentyps IV. Mit Mischungen dieser Art können vorteilhaft Formkörper mit einem zelligen Kern und kompakter Randzone hergestellt werden, die eine äußerst niedrige Gesamtdichte besitzen.

Zur Herstellung der Fluorchlorkohlenwasserstoff freien, Urethangruppen enthaltenden Formkörper mit einem zelligen Kern und einer verdichteten Randzone werden die erfindungsgemäß geeigneten Kieselgele zweckmäßigerweise in einer Menge von 0,5 bis 50 Gew.-%, vorzugsweise 1 bis 20 Gew.-% und insbesondere 2 bis 8 Gew.-%, bezogen auf das Gewicht der Aufbaukomponente(n) (b) oder (b) und (c), verwendet.

Die amorphen, mikroporösen Kieselgele können in den handelsüblichen Korngrößen eingesetzt werden. Zur Erziehung einer verbesserten Lagerstabilität und leichteren Handhabung der kieselgelhaltigen Systemkomponente werden zweckmäßigerweise amorphe, mikroporöse Kieselgele mit einer Korngröße von 0,5 bis 200 µm, vorzugsweise von 3 bis 40 µm und insbesondere von 5 bis 10 µm verwendet. Zur Verbesserung der Verarbeitbarkeit und zusätzlichen Verlängerung der Lagerstabilität der Systemkomponente hat es sich ferner als vorteilhaft erwiesen, mit Hilfe einer geeigneten Mischvorrichtung, z.B. eines Dreiwalzenstuhls, ein Konzentrat herzustellen, das besteht aus mindestens einem amorphen, mikroporösen Kieselgel und mindestens einer höhermolekularen Verbindung mit mindestens zwei reaktiven Wasserstoffatomen und hierbei den exakten Wassergehalt des Kieselgels auf den gewünschten Wert vor der Herstellung des Konzentrats einzustellen. Das Konzentrat kann auf einfache Weise mit den anderen Aufbaukomponenten gemischt oder direkt der Reaktionsmischung einverleibt werden.

Zur Herstellung von maßgeschneiderten PU-Formulierungen für bestimmte Anwendungen, wie z.B. für KFZ-Lenkräder mit niedrigem Raumgewicht oder für Schuhsohlen, kann es sich als vorteilhaft erweisen ein oder mehrere der amorphen, mikroporösen Kieselgele in Verbindung mit kristallinen, mikroporösen Molekularsieben zu verwenden.

Hierfür bewährt haben sich insbesonders kristalline, mikroporöse Molekularsiebe mit einem Durchmesser der Hohlräume von kleiner als 1,3 nm aus Metalloxiden oder Metallphosphaten, die zweckmäßigerweise ausgewählt sind aus der Gruppe der Aluminium-, Bor-, Eisen-, Chrom-, Vanadium-, Beryllium-, Antimon-, Arsen-, Gallium-, Silicium-, Germanium-, Titan-, Zirkon- und Hafniumoxide oder -phosphate, so daß derartige Molekularsiebe vorzugsweise eingesetzt werden. Hierfür geeignete Molekularsiebe können ferner Mischoxide sein, die im wesentlichen bestehen aus Aluminium-Siliciumoxid, Bor-Siliciumoxid, Eisen(III)-Siliciumoxid, Gallium-Siliciumoxid, Chrom(III)-Siliciumoxid, Beryllium-Siliciumoxid, Vanadium-Siliciumoxid, Antimon(V)-Siliciumoxid, Arsen(III)-Siliciumoxid, Titan(IV)-Siliciumoxid, Aluminium-Germaniumoxid, Bor-Germaniumoxid, Aluminium-Zirkonoxid und Aluminium-Hafniumoxid oder ausschließlich aus Siliciumdioxid. Als Metalloxide eignen sich ferner Zeolithe mit einem Durchmesser der Hohlräume von 0,74 bis 0,41 nm, die vorzugsweise ein SiO₂/Al₂O₃-Verhältnis gleich oder größer als 6 aufweisen. Die Zeolithe können beispielsweise eine Pentasil-, Faujasit-, Mordenit-, Erionit-, Chabasit-, Zeolith-A- oder Offretitstruktur aufweisen. Als kristalline mikroporöse Molekularsiebe werden vorzugsweise Mordenit in der H-Form, Na-Form oder Ammoniumform, Offretit in der H-Form, K-Form, Na-Form oder Ammoniumform, Zeolith ZSM-5 in der H-Form, Na-Form oder Ammonium-Form, Zeolith ZSM-11, Zeolith ZSM-12, Beta-Zeolith, Clinophthilolith, Ferrierit, ultrastabiler Y-Zeolith, ultrastabiler Mordenit oder Silicalite oder insbesondere Mordenit in der H- oder Na-Form oder Silicalite oder Mischungen dieser Molekularsiebe in Kombination mit den amorphen, mikroporösen Kieselgelen verwendet.

Sofern derartige Mischungen aus amorphen, mikroporösen Kieselgelen und kristallinen, mikroporösen Molekularsieben Verwendung finden, enthalten diese zweckmäßigerweise 1 bis 40 Gew.-%, vorzugsweise 3 bis 12 Gew.-% mindestens eines dieser Molekularsiebe mit einem Durchmesser der Hohlräume von kleiner als 1,3 nm aus Metalloxiden oder Metallphosphaten, bezogen auf das Gewicht der amorphen, mikroporösen Kieselgele.

g) Zusätzlich zu den erfindungswesentlichen amorphen, mikroporösen Kieselgelen oder Mischungen aus amorphen, mikroporösen Kieselgelen und kristallinen, mikroporösen Molekularsieben können zur Herstellung der Urethangruppen enthaltenden, vorzugsweise weichelastischen Formkörper mit einem zelligen Kern, einer verdichteten Randzone und einer im wesentlichen porenfreien, glatten Oberfläche gegebenenfalls auch noch andere Zusatzstoffe (f) und gegebenenfalls Hilfsmittel (g) mitverwendet werden. Als andere Zusatzstoffe (f) und Hilfsmittel (g) genannt seien beispielsweise oberflächenaktive Substanzen, Schaumstabilisatoren, Zellregler, Gleitmittel, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Gleitmittel hat sich der Zusatz eines Ricinolsäurepolyesters mit einem Molekulargewicht von 1500 bis 3500, vorzugsweise von 2000 bis 3000 besonders bewährt, der zweckmäßigerweise in einer Menge von 0,5 bis 10 Gew.-%, vorzugsweise 5 bis 8 Gew.-%, bezogen auf das Gewicht der Komponente (b) oder der Komponenten (b) und (c) eingesetzt wird.

Als Füllstoffe, insbesondere verstärkend wirkende Füllstoffe, sind die an sich bekannten, üblichen organischen und anorganischen Füllstoffe, Verstärkungsmittel, Beschwerungsmittel und Beschichtungsmittel zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Blähgraphit, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Blähgraphit und Ammoniumpolyphosphat, Ammoniumpolyphosphaten und Melamin sowie gegebenenfalls Blähgraphit und/oder Stärke zum Flammfestmachen der erfindungsgemäß hergestellten Formkörper verwendet werden. Im allgemeinen hat es sich als zweckmäßig erwiesen, 2 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der Formkörper werden die organischen, gegebenenfalls modifizierten Polyisocyanate (a), höhermolekularen Verbindungen mit mindestens zwei reaktiven Wasserstoffatomen (b) und gegebenenfalls niedermolekularen Kettenverlängerungs- und/oder Vernetzungsmittel in solchen Mengen zur Umsetzung gebracht, daß das Äquivalenz-Verhältnis von NCO-Gruppen der Polyisocanate (a) zur Summe der reaktiven Wasserstoffatome der Komponenten (b) und gegebenenfalls (c) 0,85 bis 1,50:1, vorzugsweise 0,95 bis 1,15:1 und insbesondere 0,9 bis 1,1:1 beträgt.

Die erfindungsgemäßen Urethangruppen enthaltenden, harten, halbharten oder vorzugsweise weichelastischen Formkörper können nach dem Prepolymer oder vorzugsweise nach dem one shot-Verfahren mit Hilfe der Niederdruck-Technik oder der Hochdrucktechnik in geschlossenen, zweckmäßigerweise temperierbaren Formwerkzeugen, beispielsweise metallischen Formwerkzeugen, z.B. aus Aluminium, Gußeisen oder Stahl, oder Formwerkzeugen aus faserverstärkten Polyester- oder Epoxidformmassen hergestellt werden. Aufgrund der guten Fließfähigkeit und verbesserten Verarbeitbarkeit der Formulierungen werden die Formkörper jedoch insbesondere mittels der Reaktionspritzgußtechnik (RIM-Technik) hergestellt. Diese Verfahrensweisen werden beispielsweise beschrieben von Piechota und Röhr in "Integralschaumstoff", Carl-Hanser-Verlag, München, Wien 1975; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem ZweikomponentenVerfahren zu arbeiten und die Aufbaukomponenten (b), (d), (e), (f) und gegebenenfalls (c) und (g) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 80°C, vorzugsweise von 25 bis 55°C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Die Verdichtungsgrade liegen im Bereich von 1,1 bis 8,3, vorzugsweise von 2 bis 7 und insbesondere von 2,4 bis 4,5.

Die Menge des in das Formwerkzeug eingebrachten Reaktionsgemisches wird vorteilhafterweise so bemessen, daß die erhaltenen Formkörper eine Gesamtdichte von 0,06 bis 1,2 g/cm³ aufweisen, wobei die mikrozellularen, elastischen Formkörper vorzugsweise eine Gesamtdichte von 0,7 bis 1,2 g/cm³, insbesondere von 0,8 bis 1,0 g/cm³, die harten und halbharten Formkörper vorzugsweise eine Gesamtdichte von 0,1 bis 0,9 g/cm³, insbesondere von 0,35 bis 0,8 g/cm³ und die weichelastischen Formkörper vorzugsweise eine Gesamtdichte von 0,2 bis 0,7 g/cm³, vorzugsweise von 0,4 bis 0,7 g/cm³ besitzen.

Die nach dem erfindungsgemäßen Verfahren hergestellten mikrozellularen, elastischen Formkörper finden beispielsweise Verwendung in der Automobilindustrie z.B. als Stoßstangenabdeckungen, Stoßdämpfer, Raumschutzleisten, Regenrinnen und für andere Karosserieteile. Sie eignen sich ferner als technische Gehäuseteile, z.B. für Radio- oder Fernsehgeräte, Kopiergeräte oder Computer, als Büromöbel und als Laufrollen. Die weichelastischen Formkörper finden beispielsweise Verwendung als Armlehnen, Kopfstützen und Sicherheitsverkleidungen im Kraftfahrzeuginnenraum, als Sportartikel sowie als Fahrrad- oder Motorradsattel. Sie eignen sich ferner als Innenschuh für Skistiefel oder als Schuhsohlen. Sie eignen sich insbesondere als Lenkräder für Verkehrsmittel. Die halbharten Formkörper eignen sich als Armaturenbretter und Seitenverkleidungen in Verkehrsmitteln, als Skikerne und insbesondere für die Ummantelung von metallischen Behältern, vorzugsweise von Metallfässern für Getränke, beispielsweise alkoholische oder alkoholfreie Getränke wie z.B. Bier oder Fruchtsäfte. Die harten Formkörper finden Verwendung in der Möbelindustrie, Bauindustrie und in Skipistenraupen und Schneeräumfahrzeugen.

### Beispiel 1

A-Komponente: Mischung, bestehend aus
60,80 Gew.-Teilen eines mit Glycerin gestarteten Polyoxypropylen (86,5 Gew.-%)-polyoxyethylen (13,5 Gew.-%)-polyols mit der OH-Zahl 35,
11,18 Gew.-Teilen eines mit Glycerin gestarteten Polyoxypropylen (81,5 Gew.-%)-polyoxyethylen-(18,5 Gew.-%)-polyols mit der OH-Zahl 29,
18,90 Gew.-Teilen eines mit Ethylendiamin gestarteten Polyoxypropylenpolyols mit der OH-Zahl 768,
1,0 Gew.-Teilen einer 33 gew.-%igen Lösung von Triethylendiamin in Dipropylenglykol,
0,02 Gew.-Teilen eines Schaumstabilisators auf Silikonbasis (Stabilisator OS 50 der Bayer AG),
0,1 Gew.-Teilen eines Dispergiermittels (Isol® 4R002 der Firma ISL Chemie, Köln),
2,0 Gew.-Teilen einer Pigmentpaste (Isopur® braun SA 01130/8311 der Firma ISL-Chemie, Köln) und
6,0 Gew.-Teilen eines Kieselgelkonzentrats, das bestand, bezogen auf das Gesamtgewicht, aus 50 Gew.-% eines mikroporösen Kieselgels aus Siliciumdioxid mit folgender Spezifikation:

| | |
|---|---|
| Kristallinität (Röntgendiffraktometrie) | amorph |
| Gas-Sorption BET-Oberfläche: | 682 m²/g |
| (Stickstoffsorption, 77 K) | |
| BET-Analyse C-Wert: | 2450 |
| Porenvolumen (p/p° = 0.98): | 0.345 ml/g |
| Mittlerer Porendurchmesser: | 1,5-2,5 nm |
| Isothermen-Typ: | Typ-I |
| (BDDT-Klassifizierung) | |
| Wasser-Titration (Mottlau-Fisher): | 0.35-0.41 ml/g |
| Schüttdichte: | 0.57-0.69 kg/l |
| Wassergehalt (aus Trocknungsverlust bei 160°C): | 14,6 Gew.-% |
| (BET: S. Brunauer, P.H. Emmett, E. Teller BDDT: S. Brunauer, L. Deming, W. Deming, E. Teller, J. Amer. Chem. Soc. Vol. 62, Seiten 1723 bis 1732 (1940)) und 50 Gew.-% eines mit Glycerin gestarteten Polyoxypropylen (86,5 Gew.-%)-polyoxyethylen(13,5 Gew.-%)-polyols mit der OH-Zahl 35 | |

### B-Komponente:

Urethangruppen enthaltendes Quasiprepolymer mit einem NCO-Gehalt von 28 Gew.-%, hergestellt durch Umsetzung einer Mischung aus 55 Gew.-Teilen 4,4'-Diphenylmethan-diisocyanat und 45 Gew.-Teilen einer Mischung aus Diphenylmethan-diisocyanaten und Polyphenyl-polymethylen-polyisocyanaten mit 9 Gew.-Teilen eines Polyoxypropylenglykols mit einer Hydroxylzahl von 250.

100 Gew.-Teile der A-Komponente und 50 Gew.-Teile der B-Komponente wurden bei 25°C nach dem Reaktionsspritzgupverfahren auf einer Hochdruckdosieranlage vom Typ Puromat® 80/40 der Firma Elastogran Polyurethane GmbH, Geschäftsbereich Maschinenbau, 8021 Straßlach, gemischt und in ein auf 50°C temperiertes metallisches Formwerkzeug mit den inneren Abmessungen 200x200x40 mm in einer solchen Menge eingebracht, daß sich nach dem Verschließen des Formwerkzeugs ein Verdichtungsgrad von 3,6 einstellte.

Der Formkörper wurde nach 3,5 Minuten entformt. Man erhielt eine halbharte Polyurethanplatte mit einem zelligen Kern, einer verdichteten Randzone und einer porenfreien Oberfläche, die eine Härte von Shore A 96 besaß.

Wurde die Reaktionsmischung in einem offenen Formwerkzeug aufschäumen gelassen, so erhielt man einen Schaumkörper mit der Gesamtdichte von 240 g/Liter. Hierbei gemessen wurden eine Startzeit von 25 Sekunden und eine Steigzeit von 85 Sekunden.

Entsprechend dem Beispiel 1 sind im Sinne der Erfindung als halbharte Polyurethan-Integralschaumstoff-Formkörper Produkte zu verstehen, die folgende mechanische Eigenschaften aufweisen:
eine Gesamtdichte (nach DIN 53 420) von
0,1 bis 0,9 g/cm³, insbesondere von 0,35 bis 0,8 g/cm³,
eine Bruchdehnung (nach DIN 53 504) von
10 bis 300 %, insbesondere von 50 bis 100 % und
eine Härte (nach DIN 53 504) von
Shore A 80 bis Shore D 70, insbesondere von Shora A 95 bis 98.

Derartige halbharte PolyurethanPolyurethan-Integralschaumstoff-Formkörper mit einer hohen Stoßelastizität finden insbesondere Verwendung zum Ummanteln von Metallfässern in der Getränkeindustrie, vorzugsweise von Bierfässern.

### Beispiel 2

### A-Komponente: Mischung, bestehend aus

- 61,98: Gew.-Teilen eines mit Glycerin gestarteten Polyoxypropylen (86,5 Gew.-%)-polyoxyethylen (13,5 Gew.-%)-polyols mit der Hydroxylzahl 35,
- 20,12: Gew.-Teilen eines Pfropf-polyether-polyols mit einer Hydroxylzahl von 28, hergestellt aus einem mit Glycerin gestarteten Polyoxypropylen-polyoxyethylen-polyol als Pfropfgrundlage und einer Mischung aus Styrol und Acrylnitril im Gewichtsverhältnis 12:8 als Pfropfauflage (Polyurax U 26-03 der Firma BP, Deutschland)
- 1,0: Gew.-Teilen einer 33 gew.-%igen Lösung von Triethylendiamin in Ethylenglykol,
- 1,0: Gew.-Teilen Glycerin (99,5 gew.-%ig),
- 3,82: Gew.-Teilen Ethylenglykol,
- 6,04: Gew.-Teilen Schwarzpaste N der Bayer AG und
- 6,04: Gew.-Teilen des Kieselgelkonzentrats gemäß Beispiel 1

### B-Komponente:

Mischung, bestehend aus
50 Gew.-Teilen eines Urethangruppen enthaltenden Quasiprepolymeren mit einem NCO-Gehalt von 23 Gew.-%, hergestellt durch Umsetzung von 4,4'-Diphenylmethan-diisocyanat mit einer Mischung aus Dipropylenglykol und einem Polyoxypropylenglykol mit einer Hydroxylzahl von 250 und
50 Gew.-Teilen einer Carbodiimidgruppen enthaltenden Polyisocyanatmischung mit einem NCO-Gehalt von 29,5 Gew.-%, hergestellt durch partielle Carbodiimidisierung von 4,4'-Diphenylmethan-diisocyanat.

100 Gew.-Teile der A-Komponente und 43,0 Gew.-Teile der B-Komponente wurden bei 22°C nach dem Reaktionsspritzgußverfahren auf einer Hochdruckdosieranlage vom Typ Puromat® 80/40 der Firma Elastogran Polyurethane GmbH, Geschäftsbereich Maschinenbau, 8021 Straßlach, gemischt und in ein auf 45°C temperiertes metallisches Formwerkzeug mit der Raumform eines Automobillenkrads in einer solchen Menge eingebracht, daß sich beim Aufschäumen ein Verdichtungsgrad von 4 einstellte.

Der Formkörper wurde nach 3,5 Minuten entformt. Er besaß einen zelligen Kern, eine verdichtete Randzone und eine kompakte, porenfreie Oberfläche mit einer Shore-A-Härte von 72.

Beim Verschäumen der Reaktionsmischung in einem offenen Formwerkzeug erhielt man einen Schaumstoffkörper mit einer Gesamtdichte von 195 g/Liter. Bei der Schaumreaktion gemessen wurde eine Startzeit von 20 Sekunden und eine Steigzeit von 90 Sekunden.

Entsprechend dem Beispiel 2 sind im Sinne der Erfindung als weichelastische Polyurethan-Integralschaumstoff-Formkörper Produkte zu verstehen, die eine Gesamtdichte (nach DIN 53 420) von 0,2 bis 0,7 g/cm³, vorzugsweise von 0,4 bis 0,7 g/cm³ und eine Härte (nach DIN 53 505) von Shore A 40 bis 80, vorzugsweise 55 bis 75 aufweisen.

### Beispiel 3

### A-Komponente: Mischung, bestehend aus

- 46,04: Gew.-Teilen eines mit Glycerin gestarteten Polyoxypropylen (86,5 Gew.-%)-polyoxyethylen (13,5 Gew.-%)-polyols mit der Hydroxylzahl 35,
- 26,03: Gew.-Teilen eines Pfropf-polyether-polyols mit einer Hydroxylzahl von 28, hergestellt aus einem mit Glycerin gestarteten Polyoxypropylen-polyoxyethylen-polyol als Pfropfgrundlage und einer Mischung aus Styrol und Acrylnitril im Gewichtsverhältnis 12:8 als Pfropfauflage (Polyurax U 26-03 der Firma BP, Deutschland),
- 1,0: Gew.-Teilen einer 33 gew.-%igen Lösung von Triethylendiamin in Ethylenglykol,
- 0,6: Gew.-Teilen Glycerin (99,5 gew.-%ig),
- 6,41: Gew.-Teilen Butandiol-1,4,
- 6,41: Gew.-Teilen Schwarzpaste N der Bayer AG,
- 5,12: Gew.-Teilen γ-Butyrolacton und
- 8,4: Gew.-Teilen des Kieselgelkonzentrats gemäß Beispiel 1

### B-Komponente:

Mischung, bestehend aus
50 Gew.-Teilen eines Urethangruppen enthaltenden Quasiprepolymeren mit einem NCO-Gehalt von 28 Gew.-%, hergestellt durch Umsetzung einer Mischung aus 55 Gew.-Teilen 4,4'-Diphenylmethan-diisocyanat und 45 Gew.-Teilen einer Mischung aus Diphenylmethan-diisocyanaten und Polyphenyl-polymethylen-polyisocyanaten mit 9 Gew.-Teilen eines Polyoxypropylenglykols mit einer Hydroxylzahl von 250 und
50 Gew.-Teilen einer Carbodiimidgruppen enthaltenden Polyisocyanatmischung mit einem NCO-Gehalt von 29,5 Gew.-%, hergestellt durch partielle Carbodiimidisierung von 4,4'-Diphenylmethan-diisocyanat.

100 Gew.-Teile der A-Komponenten und 45,0 Gew.-Teile der B-Komponente wurden bei 22°C nach dem Reaktionsspritzgußverfahren auf einer Hochdruckdosieranlage vom Typ Puromat® 30 P der Firma Elastogran Polyurethane Geschäftsbereich Maschinenbau, 8021 Straßlach, gemischt und in ein auf 40°C temperiertes metallisches Formwerkzeug mit den inneren Abmessungen 200x200x40 mm in einer solchen Menge eingebracht, daß sich nach dem Verschiießen des Formwerkzeugs ein Verdichtungsgrad von 2,2 einstellte.

Der Formkörper wurde nach 4 Minuten entformt. Man erhielt eine weichelastische Polyurethanplatte mit einem zelligen Kern, einer verdichteten Randzone und einer porenfreien Oberfläche, die eine Härte von Shore A 96 besaß.

Wurde die Reaktionsmischung in einem offenen Formwerkzeug aufschäumen gelassen, so erhielt man einen Schaumkörper mit der Gesamtdichte von 185 g/Liter. Hierbei gemessen wurden eine Startzeit von 18 Sekunden und eine Steigzeit von 88 Sekunden.

## Patentansprüche

1. Verfahren zur Herstellung von Fluorchlorkohlenwasserstoff freien, Urethangruppen enthaltenden Formkörpern mit einem zelligen Kern und einer verdichteten Randzone durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln,
im Äquivalenz-Verhältnis von NCO-Gruppen der Polyisocyanate (a) zur Summe der reaktiven Wasserstoffatome der Komponenten (b) und gegebenenfalls (c) von 0,85 : 1 bis 1,50 : 1
in Gegenwart von
d) Treibmitteln, wobei Fluorchlorkohlenwasserstoffe ausgenommen sind,
e) Katalysatoren,
f) Zusatzstoffen und gegebenenfalls
g) Hilfsmitteln
in einem geschlossenen Formwerkzeug unter Verdichtung, dadurch gekennzeichnet, daß man als Zusatzstoff (f) amorphe, mikroporöse Kieselgele verwendet, die ein Porenvolumen im Bereich von 0,15 bis 1,8 ml/g besitzen, gemessen durch Titration nach dem von A.Y. Mottlau und N.E. Fischer in Analytical Chemistry, Vol. 34(6), Seiten 714 und 715 beschriebenen Verfahren, und
die einen mittleren Porendurchmesser haben, der zu mehr als 40 % im Bereich von 0,1 bis 10 nm liegt, berechnet aus dem porenvolumen nach dem BJH-Modell, beschrieben von E.P. Barrett, L.G. Joyner und P.P. Halenda im Journal of American Chemical Society, Vol. 73, 1951, Seiten 373 bis 380.

2. Verfahren nach Anspruch 1, dadurch gekennzeichnet, daß die amorphen, mikroporösen Kieselgele mittlere Porendurchmesser haben, die zu mehr als 40 % im Bereich von 0,5 bis 5 nm liegen.

3. Verfahren nach Anspruch 1, dadurch gekennzeichnet, daß die amorphen, mikroporösen Kieselgele Porenvolumen im Bereich von 0,2 bis 1,1 ml/g besitzen.

4. Verfahren nach Anspruch 1, dadurch gekennzeichnet, daß die amorphen, mikroporösen Kieselgele BET-Oberflächen im Bereich von 200 bis 900 m²/g besitzen.

5. Verfahren nach Anspruch 1, dadurch gekennzeichnet, daß die amorphen, mikroporösen Kieselgele eine chemische Zusammensetzung besitzen, die mindestens 80 Gew.-%, bezogen auf das Gesamtgewicht, Siliciumdioxid enthält.

6. Verfahren nach Anspruch 1, dadurch gekennzeichnet, daß die amorphen, mikroporösen Kieselgele eine chemische Zusammensetzung besitzen, die neben Siliciumdioxid zusätzlich Oxide des Aluminiums, Titans, Zirkons, Magnesiums, Niobs, Eisens oder Zinks oder mindestens zwei dieser Metalloxide enthält.

7. Verfahren nach Anspruch 1, dadurch gekennzeichnet, daß man die amorphen, mikroporösen Kieselgele in einer Menge von 0,5 bis 50 Gew.-%, bezogen auf das Gewicht der Aufbaukomponente (b) oder (b) und (c) verwendet.

8. Verfahren nach Anspruch 1, dadurch gekennzeichnet, daß man den Zusatzstoff (f) in Form eines Konzentrats, bestehend aus mindestens einem amorphen, mikroporösen Kieselgel und mindestens einer höhermolekularen Verbindung mit mindestens zwei reaktiven Wasserstoffatomen, verwendet.

9. Verfahren nach Anspruch 1, dadurch gekennzeichnet, daß man als Zusatzstoff (f) amorphe, mikroporöse Kieselgele in Kombination mit mikroporösen, kristallinen Molekularsieben verwendet.

10. Verfahren nach Anspruch 1, dadurch gekennzeichnet, daß man als Zusatzstoffe (f) amorphe, mikroporöse Kieselgele in Kombination mit mikroporösen, kristallinen Molekularsieben aus der Gruppe der Mordenite in der H- oder Na-Form, der Silicalite oder mit Mischungen dieser Molekularsiebe verwendet.

11. Verfahren nach Anspruch 1, dadurch gekennzeichnet, daß man die amorphen, mikroporösen Kieselgele in Verbindung mit zusätzlichem Wasser oder physikalisch wirkenden Treibmitteln mit Ausnahme von Fluorchlorkohlenwasserstoffen oder Mischungen aus Wasser und derartigen physikalisch wirkenden Treibmitteln als Treibmittel (d) verwendet.

12. Verfahren nach Anspruch 1, dadurch gekennzeichnet, daß die Fluorchlorkohlenwasserstoff freien, Urethangruppen enthaltenden Formkörper mit Hilfe der RIM-Technik oder Niederdrucktechnik hergestellt werden.

13. Verfahren nach Anspruch 1 zum Ummanteln von metallischen Behältern, vorzugsweise von Metallfässern für Getränke.

14. Verfahren nach Anspruch 1 zur Herstellung von Lenkrädern für Verkehrsmittel.

## Claims

1. A process for the production of chlorofluorocarbon-free, urethane-containing moldings having a cellular core and a compacted peripheral zone, by reacting
a) an organic and/or modified organic polyisocyanate with
b) at least one relatively high-molecular-weight compound containing at least two reactive hydrogen atoms, and, if desired,
c) a low-molecular-weight chain extender and/or crosslinking agent,
in an equivalence ratio between the NCO groups of the polyisocyanate (a) and the total number of reactive hydrogen atoms of component (b) and, if used, (c) of from 0.85:1 to 1.50:1,
in the presence of
d) a blowing agent, with the exception of chlorofluorocarbons,
e) a catalyst,
f) additives and, if desired,
g) assistants,
in a closed mold with compaction, wherein one of the additives (f) is an amorphous, microporous silica gel which has a pore volume in the range from 0.15 to 1.8 ml/g, measured by titration using the method described by A.Y. Mottlau and N.E. Fischer in Analytical Chemistry, Vol. 34(6) (1962), pages 714 and 715, and which has a mean pore diameter with a frequency of occurrence of more than 40 % in the range from 0.1 to 10 nm, calculated from the pore volume in accordance with the BJH model described by E.P. Barrett, L.G. Joyner and P.P. Halenda in Journal of the American Chemical Society, Vol. 73 (1951), 373-380.

2. A process as claimed in claim 1, wherein the amorphous, microporous silica gel has a mean pore diameter with a frequency of occurrence of more than 40 % in the range from 0.5 to 5 nm.

3. A process as claimed in claim 1, wherein the amorphous, microporous silica gel has a pore volume in the range from 0.2 to 1.1 ml/g.

4. A process as claimed in claim 1, wherein the amorphous, microporous silica gel has a BET surface area in the range from 200 to 900 m²/g.

5. A process as claimed in claim 1, wherein the amorphous, microporous silica gel has a chemical composition which contains at least 80 % by weight, based on the total weight, of silicon dioxide.

6. A process as claimed in claim 1, wherein the amorphous, microporous silica gel has a chemical composition which, in addition to silicon dioxide, additionally contains an oxide of aluminum, titanium, zirconium, magnesium, niobium, iron or zinc, or at least two of these metal oxides.

7. A process as claimed in claim 1, wherein the amorphous, microporous silica gel is used in an amount of from 0.5 to 50 % by weight, based on the weight of starting component (b) or (b) and (c).

8. A process as claimed in claim 1, wherein the additive (f) is used in the form of a concentrate comprising at least one amorphous, microporous silica gel and at least one relatively high-molecular-weight compound containing at least two reactive hydrogen atoms.

9. A process as claimed in claim 1, wherein the additive (f) used is an amorphous, microporous silica gel in combination with a microporous, crystalline molecular sieve.

10. A process as claimed in claim 1, wherein the additive (f) used is an amorphous, microporous silica gel in combination with a microporous, crystalline molecular sieve from the group comprising the mordenites in the H or Na form and the silicalites, or with mixtures of these molecular sieves.

11. A process as claimed in claim 1, wherein the amorphous, microporous silica gel is used in combination with additional water or a physical blowing agent, with the exception of chlorofluorocarbons, or mixtures of water and such a physical blowing agent as the blowing agent (d).

12. A process as claimed in claim 1, wherein the chlorofluorocarbon-free, urethane-containing moldings are produced by RIM or the low-pressure process.

13. A process as claimed in claim 1 for coating metal containers, preferably metal barrels for beverages.

14. A process as claimed in claim 1 for the production of steering wheels for vehicles.

## Revendications

1. Procédé de fabrication d'articles moulés contenant des groupements uréthanne et dépourvus d'hydrocarbures fluorohlorés, comportant un noyau cellulaire et une couche externe compacte, par réaction de
a) polyisocyanates organiques et/ou organiques modifiés avec
b) au moins un composé de poids moléculaire élevé comportant au moins deux atomes d'hydrogène réactifs et éventuellement
c) des agents d'allongement de chaîne et/ou de réticulation de faible poids moléculaire,
dans un rapport en équivalents des groupements NCO des polyisocyanates (a) à la somme des atomes d'hydrogène réactifs des composants (b) et éventuellement (c) de 0,85:1 a 1,50:1,
en présence
d) d'agents moussants, à l'exclusion d'hydrocarbures fluorochlorés,
e) de catalyseurs,
f) d'additifs et éventuellement
g) d'adjuvants,
avec compactage dans un outil de moulage fermé, caractérisé en ce que l'on utilise, comme additif (f), des gels de silice microporeux amorphes qui ont un volume de pores compris entre 0,15 et 1,8 ml/g, mesuré par titrage selon le procédé décrit par A.Y. Mottlau et N.E. Fischer dans Analytical Chemistry, vol. 34(6), pages 714 et 715, et
qui ont un diamètre moyen de pores qui se situe, pour plus de 40%, dans la gamme de 0,1 à 10 nm, calculé d'après le volume de pores conformément au modèle BJH, décrit par E.P. Barrett, L.G. Joyner et P.P. Halenda dans le Journal of American Chemical Society, vol. 73, 1951, pages 373 à 380.

2. Procédé selon la revendication 1, caractérisé en ce que les gels de silice microporeux amorphes ont des diamètres moyens de pores qui se situent, pour plus de 40%, dans la gamme de 0,5 à 5 nm.

3. Procédé selon la revendication 1, caractérisé en ce que les gels de silice microporeux amorphes ont un volume de pores compris entre 0,2 et 1,1 ml/g.

4. Procédé selon la revendication 1, caractérisé en ce que les gels de silice microporeux amorphes ont des surfaces BET comprises entre 200 et 900 m²/g.

5. Procédé selon la revendication 1, caractérisé en ce que les gels de silice microporeux amorphes ont une composition chimique qui comprend au moins, par rapport au poids total, 80% en poids de dioxyde de silicium.

6. Procédé selon la revendication 1, caractérisé en ce que les gels de silice microporeux amorphes ont une composition chimique qui, en dehors du dioxyde de silicium, comprend de plus des oxydes de l'aluminium, du titane, du zirconium, du magnésium, du niobium, du fer ou du zinc ou au moins deux de ces oxydes métalliques.

7. Procédé selon la revendication 1, caractérisé en ce que l'on utilise les gels de silice microporeux amorphes en une quantité de 0,5 à 50% en poids par rapport au poids des constituants (b) ou (b) et (c).

8. Procédé selon la revendication 1, caractérisé en ce que l'on utilise l'additif (f) sous forme d'un concentré, consistant en au moins un gel de silice microporeux amorphe et au moins un composé de poids moléculaire élevé ayant au moins deux atomes d'hydrogène réactifs.

9. Procédé selon la revendication 1, caractérisé en ce que l'on utilise comme additif (f) des gels de silice microporeux amorphes en combinaison avec des tamis moléculaires microporeux cristallins.

10. Procédé selon la revendication 1, caractérisé en ce que l'on utilise comme additif (f) des gels de silice microporeux amorphes en combinaison avec des tamis moléculaires microporeux cristallins du groupe de la mordénite sous forme H ou Na, de la silicalite ou avec des mélanges de ces tamis moléculaires.

11. Procédé selon la revendication 1, caractérisé en ce que l'on utilise les gels de silice microporeux amorphes en liaison avec de l'eau ajoutée ou des agents moussants à action physique, à l'exclusion d'hydrocarbures fluorochlorés ou des mélanges d'eau et de tels agents moussants à action physique en tant qu'agent moussant (d).

12. Procédé selon la revendication 1, caractérisé en ce que les articles moulés contenant des groupements uréthanne et dépourvus d'hydrocarbures fluorochlorés sont fabriqués au moyen de la technique RIM ou de la technique basse pression.

13. Procédé selon la revendication 1 pour le chemisage de récipients métalliques, en particulier de contenants métalliques pour boissons.

14. Procédé selon la revendication 1 pour la fabrication de volants de direction pour des moyens de transport.
